Europäisches Patentamt

European Patent Office

Office européen des brevets

(19)

(11) Publication number: **0 033 800**
**B1**

(12) **EUROPEAN PATENT SPECIFICATION**

(45) Date of publication of patent specification: **11.04.84**

(51) Int. Cl.³: **G 01 P 13/04, G 01 P 3/488**

(21) Application number: **80303867.8**

(22) Date of filing: **30.10.80**

(54) Motion sensing system.

(30) Priority: **04.02.80 PC T/US80/00115**

(43) Date of publication of application:
**19.08.81 Bulletin 81/33**

(45) Publication of the grant of the patent:
**11.04.84 Bulletin 84/15**

(84) Designated Contracting States:
**BE DE FR GB IT**

(56) References cited:
**DE - A - 2 538 531**
**GB - A - 1 510 034**
**US - A - 3 855 525**
**US - A - 4 056 747**
**US - A - 4 182 986**

**"Motorola Phase-Locked Loop Chip" Motorola**
**sheet MC14046B - CMOS MS1 (Low Power**
**complentary MOS)**

(73) Proprietor: **CATERPILLAR TRACTOR CO.**
**100 Northeast Adams Street**
**Peoria Illinois 61629 (US)**

(72) Inventor: **Gudat, Adam J.**
**R.R. 1 Box 66A**
**Edelstein Illinois 61526 (US)**

(74) Representative: **Brunner, Michael John et al,**
**GILL JENNINGS & EVERY 53-64 Chancery Lane**
**London WC2A 1HN (GB)**

Courier Press, Leamington Spa, England.

## Motion sensing system

This invention relates to apparatus for sensing the motion of parts such as gears and particularly to a velocity sensing system in which a frequency modulated (FM) signal is generated as a result of relative motion between the monitored parts and a sensor. Velocities are detectable over a wide range extending at the low end to zero.

A determination of the speed and direction of motion of a rotating or linearly translating body such as a drive gear or gear rack is obtainable through the use of a number of prior art devices and techniques; for example, electro optical devices, Hall-effect devices and electromagnetic sensors can be used to generate pulses as the part moves past the sensor and the pulses can then be processes to yield the desired data. Optical devices require a relatively clean environment; Hall-effect devices are expensive and often technically complex. These factors would seem to favour the electromagnetic sensors; however, a practical disadvantage of the electromagnetic sensor is its sensitivity to spacing variations between itself and the translating part, and the dependence of signal strength on the speed of the translating part; i.e. since the signal generator in the sensor is responsive to the change in magnetic flux per unit time, very low speeds of translation render the sensor signal substantially useless in the subsequent data processor. Accordingly, electromagnetic sensors are not generally used where speeds at or near zero are to be detected. One approach to wheel or gear speed measurement in which electromagnetic sensor disadvantages are reduced is disclosed in US—A—4056747. That device utilizes counters and data registers responsive to positive and negative transitions of a sensor signal to provide a digital speed indication.

According to the present invention a motion measuring system for measuring the velocity of a moving part such as a gear which has relatively well defined adjacent areas of alternately different physical characteristics comprises a signal generator for producing an alternating output signal; a sensor, adjacent the moving part and connected to the signal generator, for alternately varying the signal generator output signal between a high and a low frequency as the alternate adjacent areas of the moving part pass the sensor; detector means connected to the signal generator to receive and detect the variable frequency signal of the signal generator, characterized in that the detector means comprises a reference frequency generator for producing a reference signal having a frequency between the high and low output signal frequencies of the signal generator, and means for receiving and comparing the variable and reference frequency signals of the signal generator and reference frequency generator respectively and producing at the output of the detector means a first level digital signal in response to the variable frequency signal being higher in frequency than the reference frequency signal and a second level digital signal in response to the variable frequency signal being lower in frequency than the reference frequency signal.

Such a system may comprise an oscillator having a tank circuit which controls the frequency of the oscillator output and a magnetic flux sensitive sensor adjacent the part to define a portion of a flux path which links the part and in which the magnetic flux varies in intensity according to the physical characteristic of the part immediately adjacent the sensor. The tank circuit of the oscillator is linked with the flux path so that the electrical tuning of the tank circuit varies as the moving part passes by the sensor, thus producing an alternating shift in the frequency of the output signal between relatively high and low frequency levels. The speed of the moving part is determined as a function of the rate at which the oscillator varies between the high and low frequencies.

One example of a system according to the invention will now be described with reference to the accompanying drawings in which:—

Figure 1 illustrates a system applied to the measurement of gear tooth velocity;

Figure 2 is a graphical representation of certain signal frequencies under various operating conditions of the system of Figure 1;

Figure 3 is a plan view of a preferred electromagnetic pickup design for use in the motion sensor portion of the system of Figure 1;

Figure 4 is a block diagram of the system incorporated in a speed control system for off-road vehicles.

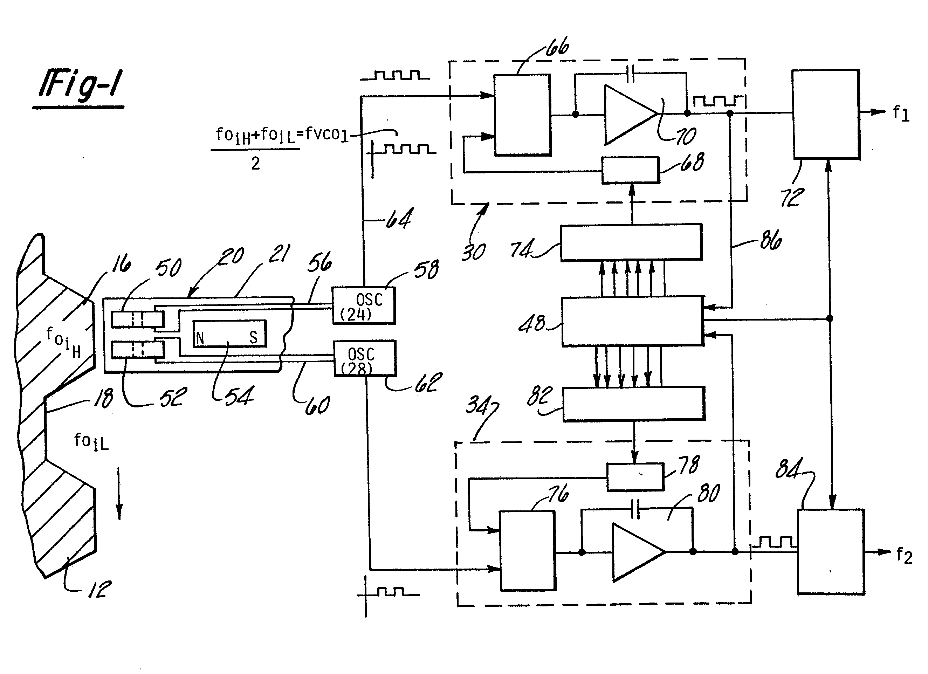

Figure 1 illustrates an embodiment of the invention utilized to measure the peripheral velocity of teeth 16 in a rotating gear 12. The embodiment comprises a pickup 20 placed closely adjacent the gear 12 such that when the gear 12 moves in the direction of the arrow the end of the sensor body is alternately adjacent the gear teeth 16 and troughs 18. The sensor 20 comprises a body 21 of non-magnetic material such as epoxy or a suitable mouldable polymer holding in place a pair of ferromagnetic cores 50 and 52 which are spaced apart in the direction of gear tooth motion by a distance which is substantially less than the circumferential distance between adjacent teeth 16. The body 21 of the sensor 20 also carries therein a unidirectional flux source in the form of a permanent magnet 54 which is oriented such that the flux pattern passes through the cores 50 and 52 and emerges from the end of the body adjacent the gear tooth profile being monitored. It will be apparent to those familiar with electromagnetic phenomena that the amount of flux actually linking the cores 50 and 52 at any given time is closely dependent upon the reluctance of the flux path which, in this case, is a function of the proximity of the gear 12 which is presumed to be constructed of a ferromagnetic material; i.e., a greater flux intensity links the cores 50 and 52 when a tooth 16 is adjacent the sensor body 20 and a lesser flux intensity links the cores when a trough 18 is immediately adjacent the sensor end.

Core 50 is linked to a conductor 56, of a signal generator 24, which forms a tank circuit for a conventional oscillator 58. Similarly, core 52 is linked to a conductor 60, of a signal generator 28, which forms a tank circuit for conventional oscillator 62. Accordingly, the output signal frequencies of the oscillators 58 and 62 of the signal generators 24, 28 vary between relatively higher and lower values as the gear 12 translates past the sensor 20, the relatively high frequency components representing the proximity of a gear tooth 16 and the relatively low frequency components representing the proximity of a trough 18. Again the signals which are produced by the oscillators 58 and 62 can be made substantially identical but phase shifted by an angle dependent upon the physical spacing between the cores 50 and 52. For signal processing purposes the physical spacing between the cores is preferably less than half of the distance between adjacent teeth 16.

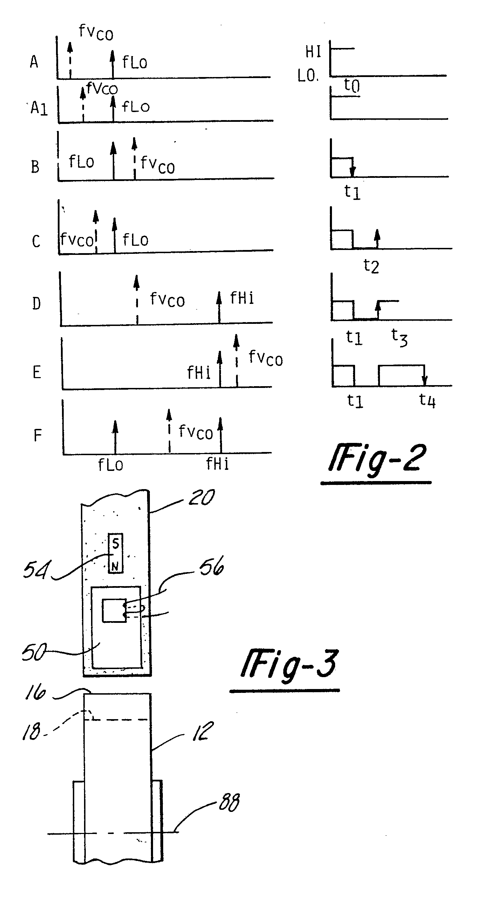

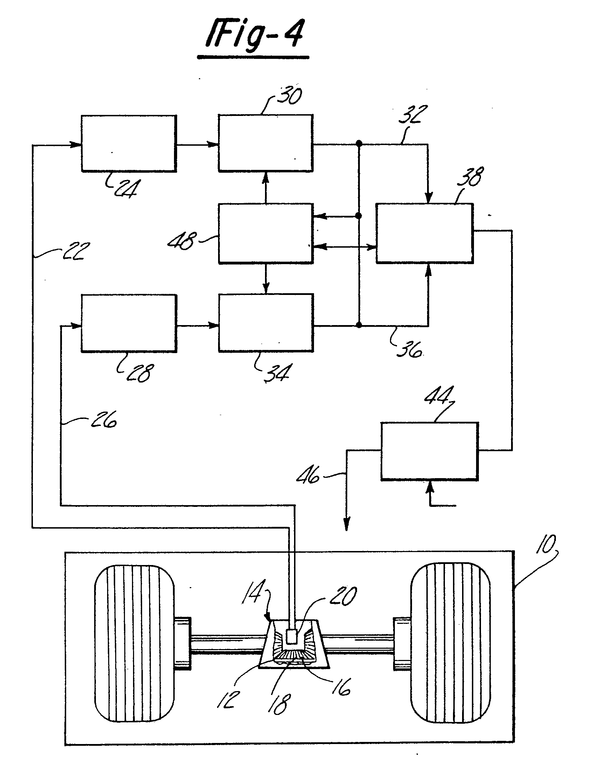

The variable frequency output of oscillator 58 is connected via line 64 to the first input of a phase detector 66 which forms part of the FM-to-digital converter circuit 30. A second input to phase detector 66 is derived from a voltage controlled oscillator VCO 68 which produces a reference frequency signal which, for normal operating conditions, is set to the mean or average of the high and low frequency outputs of oscillator 58; i.e., the reference frequency signal is preferably half-way between the high and low frequency components. The output of the detector 66 is a signal comprising a series of very closely spaced pulses during that portion of the input cycle when the frequency on line 64 is less or more than the output frequency of the voltage controlled oscillator 68. The output signal is applied to an integrator 70 to produce a digital signal which alternates between relatively higher and lower amplitude levels representing the frequency changes in the signal from oscillator 58. This digitized signal is connected back to the microprocessor 48 which controls the reference frequency of the voltage controlled oscillator 68 through a digital-to-analog converter 74 for initialization and recalibration purposes as hereinafter described. The digital signal is also connected through a latch circuit 72 to the output $f_1$ for processing by subsequent circuitry in accordance with the disclosure of Fig. 4.

The phase shifted signal from oscillator 62 is connected to the FM-to-digital converter 34 which, like converter 30 comprises a phase detector 76, a voltage controlled oscillator 78, and an integrator 80 to produce a digital output signal $f_2$. A latch circuit 84 is disposed in the signal line for initialization and recalibration purposes to be described. Again, the digital signal is also connected back to the microprocessor 48 for purposes of controlling the reference frequency of voltage controlled oscillator 78 through a control channel which comprises a digital-to-analog converter 82.

Although the operation of the circuit of Fig. 1 is believed to be apparent from the foregoing, a brief review will now be made. As the gear 12 rotates the presence of a tooth 16 immediately adjacent the sensor 20 results in a tuning of oscillator 58 to the high frequency level and, in delayed phase relation, a similar tuning of oscillator 62 to the high frequency level. The high frequency level is detected by phase detector 66 to be greater than the reference frequency from voltage controlled oscillator 68 and accordingly a high digital level is generated at the output of converter 30. As the gear continues to move, sensor 20 senses a trough 18, the tank circuit 56 retunes oscillator 58 to the low frequency component, the low frequency level is detected by frequency detector 66 to be less than the reference frequency from oscillator 68 and, accordingly, a low digital level appears at the output of converter 30. As the gear 12 continues to rotate detector 66 in converter 30 continues to switch back and forth between the high and low conditions producing a digital signal, the levels of which occur at a rate which is synchronous with the rate of appearance of the gear teeth 16 adjacent the sensor 20. The signal level is in no sense dependent upon the rate at which the gear 12 translates past the sensor 20, hence there is no speed limitation imposed on the subject device by the manner in which the electromagnetic sensor 20 operates. Converter 34 functions similarly to produce a second digital signal identical to the first but shifted in phase by a small amount relative thereto.

If all of the physical and electrical parameters of the circuit of Fig. 1 are well known it is theoretically possible to predetermine the high and low output frequency components of the oscillators 58 and 62 and, from this data, preset the reference frequencies which are produced by the voltage controlled oscillators 68 and 78. However, as a practical matter, variations in installation procedure, temperature, gear teeth profile, sensor spacing, and other contributing factors suggest that the reference frequencies be set on an empirical basis by means of a process which is readily carried out by the microprocessor 48 in the embodiment of Figure 1. The primary steps in the process are now described with reference to the diagram of Figure 2, the right hand side of which indicates the voltage output from the integrator 70 and the left hand side of which indicates the frequencies of the signals applied to the detector 66.

The overall objective of the process is to identify the high and low frequency components which are generated by oscillator 58 as the gear 12 passes by the end of the sensor body 20 and to set the frequency of the voltage controlled oscillator 68 between them. It is presumed that neither the high frequency value nor the low frequency value is initially known.

The first step involves setting the voltage controlled oscillator to a very low frequency, as shown on line A of Figure 2 such that it is substantially below the frequency of the lowest expected value of either the low or the high frequency components from oscillator 58. Under these circumstances, a high digital signal level is generated and presented to the microprocessor 48 on signalline 86. The frequency of the voltage controlled oscillator 68 ($f_{vco}$) is repeatedly increased by increments of about 1kHz by an appropriate signal from microprocessor 48. The microprocessor 48 re-examines the output signal of convertor 30 after each increment to determine if the frequency from oscillator 58 (Figure 2-AI) has exceeded the frequency from vco 68. As shown on line B of Figure 2, when the incremental increase occuring at $t_1$ raises $f_{vco}$ above the unknown output of oscillator 58, a transition occurs at the output of the integrator 70. This transition identifies the frequency within the resolution permitted by the increment size but does not provide enough information to determine whether the identified frequency of $f_{hi}$ or $f_{Lo}$. Therefore, the identified frequency value is temporarily stored in memory locations corresponding to both $f_{hi}$ and $f_{Lo}$.

The output of the voltage controlled oscillator 68 is stepped back and forth across the identified frequency ($f_{Lo}$) for as long as it remains unchanged. Each such step produces a transition at the output of integrator 70. When the signal frequency from oscillator 58 changes either increasingly or decreasingly, the incremental reciprocations of $f_{vco}$ produce no further transitions. The output of integrator 70 thus remains either high or low, depending on the direction of change in the signal being identified. The level at which the signal from integrator 70 remains determines whether the signal frequency just found is either $f_{hi}$ or $f_{Lo}$; e.g. if it remains high, the signal is $f_{Lo}$.

The output of oscillator 68 is now incremented or decremented toward the remaining unknown frequency from oscillator 58. In the illustrated case, the remaining unknown is $f_{hi}$ and the persistent high signal state after $t_2$ positively declares this to be the case. Accordingly, the output from VCO 68 is incremented until at $t_4$ another transition in the output of integrator 70 occurs. This final transition identifies $f_{hi}$ and the value thereof is caused by microprocessor 48 to be stored in the $f_{hi}$ memory location, replacing the $f_{Lo}$ signal previously in that loca-

tion. Finally, $f_{hi}$ and $f_{Lo}$ are averaged and $f_{vco}$ is set exactly half-way between the two frequencies, as shown on line F of Fig. 2. Under these conditions the output of oscillator 58 alternates back and forth between $f_{Lo}$ and $f_{Hi}$ to produce an alternating digital signal at $f_1$ of Fig. 1.

Substantially the same method is programmed for periodic utilization in the system of Fig. 1 for recalibration purposes except that the starting point is the last stored value in the microprocessor 48 instead of the very low frequency generated at initial calibration. This method is preferably carried out on a recurring basis and between transitions of the digital output signal $f_1$ to account for gear eccentricities, wobble, temperature shifts and other changes in operating conditions which might otherwise disturb the output frequencies enough to generate false transitions. To prevent the artificial shifts in $f_{vco}$ from generating transitions during the recalibration process the microprocessor 48 latches the circuits 72 and 84 to hold the last generated digital signal level until the recalibration method is complete.

Referring now to Fig. 3, the preferred form of a sensor 20 is illustrated adjacent the teeth 16 of a gear 12 which is adapted for rotation about a central axis 88. The sensor 20 comprises a body in the form of an epoxy bar which has been molded around a small permanent magnet 54 and a pair of ferrite cores, only core 50 being apparent in Fig. 3. Core 50 is preferably of elongated configuration with the aperture receiving winding 56 being offset away from the terminal end of the sensor body the sensor sensing the varying inductance of the coil which changes with the flux passing through the core. With this construction the sensor 20 may be set very close to the periphery of the gear teeth 16, much sloser than is indicated by the relative spacing in Fig. 3, with the confidence that accidental contact due to eccentricity or shifting under load will merely wear away the elongated end of the core 50 with little or no appreciable change in magnetic characteristic and without breaking or altering the close loop nature of the core 50.

Fig. 4 illustrates a system embodying the invention as applied to the control of the drive unit for a heavy off road vehicle 10 such as a tractor or earth mover. The drive unit of the vehicle 10 includes a differential 14 with a bevel gear 12 whose speed and direction of rotation is to be determined through the embodiment of the invention. Gear 12 exhibits peripheral gear teeth 16 separated by troughs 18 to mesh with mating gears, the teeth 16 and troughs 18 representing relatively well defined areas of alternately opposite physical characteristics.

Disposed adjacent the periphery of gear 12 and suitably mounted on the vehicle 10 is an electromagnetic sensor 20 having individual pickups of which the first is connected by circuit 22 to an FM signal generator 24. The output of generator 24 is a frequency modulated signal which varies discretely and abruptly between relatively higher and lower frequency levels as the gear 12 rotates about its axis so as to cause a translation of the gear profile past the sensor 20. In the illustrated embodiment, the presence of a gear tooth 16 immediately adjacent the sensor 20 results in a relatively high frequency output signal from FM signal generator 24 and the presence of a trough 18 immediately adjacent the sensor 20 results in a relatively low frequency signal. The generator 24 is designed such that the shift between frequency levels is relatively abrupt and generally synchronous with the linear translation of the gear 12.

The second pickup in sensor 20 is connected by line 26 to a second FM signal generator 28, the output of which is identical to the output of the signal generator 24 but shifted in phase by a phase angle which is related to the physical distance between the pickups measured along a line tangent to the periphery of gear 12 immediately in the area of the sensor 20.

The frequency modulated output signal from generator 24 is connected to an FM to digital signal converter 30 which functions in the manner of a frequency detector to produce a digital output signal at 32, the two levels of which are representative of the relative high and low frequency components of the FM signal from generator 24. In brief, the converter 30 digitizes the signal from generator 24 so that it may be processed in later circuitry to yield speed and direction data.

FM signal generator 28 is similarly connected to a converter unit 34 which is identical to unit 30 to produce a second digitized signal at 36. This signal is identical to but phase shifted from the signal at 32. Both of the signals at 32 and 36 are connected as inputs to a speed and direction calculator 38 which is a prior art device. As will be apparent to those skilled in the art, speed may be readily determined by a simple process of counting clock pulses between transitions of the digital signal and direction may be determined by comparing the phase shift between the signals at 32 and 36. The speed and direction calculator unit 38 may be interconnected with a microprocessor 48 which is a small limited capacity digital computer carried on board the vehicle 10 for speed and direction control purposes. The microprocessor 48 is also interconnected with the first and second phase converter units 30 and 34 for initialization and recalibration purposes to be described hereinbefore in greater detail.

The data from the drive calculator 38 is connected by a suitable multiconductor bus to a drive control unit 44 to provide control signals to the transmission unit which ultimately supplies power to gear 12. The drive control unit 44 is a feedback system in which the control signal on channel 46 drives to zero any differences between operator input commands and actual speed and/or direction signals from the unit 38.

The velocity sensor of the invention may be applied as described above to control the speed of vehicle drive components. In addition it may be used to monitor gear speed in many other industrial applications such as position control systems, automatic milling machines, die set accelerators, length control systems for tube mills, conveyors and tachometers. In addition, the invention may be applied to the counting and/or monitoring of gear rack teeth and discrete parts such as castings and stampings which move linearly rather than angularly.

**Claims**

1. A motion measuring system for measuring the velocity of a moving part (12) such as a gear which has relatively well defined adjacent areas of alternately different physical characteristics, the system comprising a signal generator (24) for producing an alternating output signal; a sensor (20), adjacent the moving part (12) and connected to the signal generator (24) for alternately varying the signal generator output signal between a high and a low frequency as the alternate adjacent areas (16, 18) of the moving part pass the sensor (20); detector means (30) connected to the signal generator (24) to receive and detect the variable frequency signal of the signal generator, characterized in that the detector means (30) comprises a reference frequency generator (68) for producing a reference signal having a frequency between the high and low output signal frequencies of the signal generator (24), and means (66, 70) for receiving and comparing the variable and reference frequency signals of the signal generator and reference frequency generator respectively and producing at the output of the detector means (30) a first level digital signal in response to the variable frequency signal being higher in frequency than the reference frequency signal and a second level digital signal in response to the variable frequency signal being lower in frequency than the reference frequency signal.

2. A system according to claim 1, further including a digital processor (48) connected to the reference frequency generator (68) to reset the reference frequency to compensate for shifts in frequency of the variable frequency signal.

3. A system according to claim 2, further including latch means (72) having an input and output, the input of the latch means (72) being connected to receive the digital output signal of the detector means (30), the latch means (72) being responsive to a control signal from the digital processor (48) to maintain on the latch means output a signal equal to one of the digital levels at the output of the detector means (30) irrespective of variations in the signal levels at the input of the latch means (72).

4. A system according to claim 1, wherein the signal generator (24) comprises an electronic oscillator (58) having an output (64) and a tank circuit (56) for controlling the frequency of signals at the output of the electronic oscillator (64); and wherein the sensor (20) is a magnetic sensor defining a flux path which links to the moving part (12) and in which the magnetic flux intensity varies according to the physical characteristic of the part area immediately adjacent the sensor (50), the tank circuit (56) linking with the flux path to vary the frequency of the oscillator output signal alternately between a high and a low frequency as the part (12) moves relative to the sensor (20).

5. A system according to claim 4, wherein the magnetic sensor (20) comprises a core (50) of ferromagnetic material, a source (54) of magnetic flux, and a support body supporting the core and the flux source in magnetic juxtaposition, the tank circuit (56) comprising a coil wound around the core to sense the varying inductance of the coil with changes in the flux passing through the core.

6. A system according to claim 1, including a further signal generator (28) for producing an alternating output signal; a further sensor (20, 52) adjacent the moving part and connected to the further signal generator (28) for alternately varying the output signal of the further signal generator between a high and a low frequency as the alternate adjacent areas (16, 18) of the moving part pass the further sensor (20, 52); a further detector means (34) connected to the further signal generator (28) to receive and detect the variable frequency signal of the further signal generator and comprising a further reference frequency generator (78) for producing a reference signal having a frequency between the high and low output signal frequencies of the further signal generator (28) and further means (76, 80) for receiving and comparing the variable and reference frequency signals of the further signal generator and the further reference frequency generator respectively and producing at the output of the further detector means (34) a first level digital signal in response to the variable frequency signal of the further signal generator being higher in frequency than the reference frequency signal of the further reference frequency generator and a second level digital signal in response to the variable frequency signal of the further signal generator being lower in frequency than the reference frequency signal of the further reference frequency generator, the digital output signal at the output of the further detector means (34) being phase shifted from the digital output signal at the output of the detector means (30).

7. A system according to claim 3, including computing means (38) for receiving the digital output signal of the latch means (72) and producing a signal indicative of the velocity of the moving part (12).

8. A system according to claims 6 and 7, including further latch means (84) having an input and an output, the input of the further latch means (84) being connected to receive the digital output signal of the further detector means (34) and the further latch means (84) being responsive to a control signal from the digital processor (48) to maintain on the further latch means output a signal equal to one of the digital levels at the output of the further detector means (34) irrespective of variations in the signal levels at the input of the further latch means (84), the computing means (38) further receiving the digital output signal of the further latch means (84) and producing a signal indicative of the direction of movement of the moving part (12).

**Revendications**

1. Système de mesure de mouvement pour mesurer la vitesse d'une pièce en mouvement (12) telle qu'une roue dentée qui a des zones adjacentes relativement bien définies de caractéristiques physiques alternativement différentes, le système comprenant un générateur de signaux (24) pour produire un signal de sortie alternatif; un détecteur (20) adjacent à la partie en mouvement (12) et connecté au générateur de signaux (24), pour faire varier alternativement le signal de sortie du générateur de signaux entre une haute et une basse fréquences alors que les zones adjacentes alternées (16, 18) de la pièce en mouvement passent par le détecteur (20); un moyen détecteur (30) connecté au générateur de signaux (24) pour recevoir et détecter le signal de fréquence variable du générateur de signaux, caractérisé en ce que le moyen détecteur (30) comprend un générateur (68) de fréquence de référence pour produire un signal de référence ayant une fréquence entre les haute et basse fréquences du signal de sortie du générateur de signaux (24), et un moyen (66, 70) pour recevoir et comparer les signaux de fréquences variable et de référence du générateur de signaux et du générateur de la fréquence de référence respectivement, pour produire à la sortie du moyen détecteur (30) un signal numérique d'un premier niveau lorsque le signal de fréquence variable est plus grand en fréquence que le signal de fréquence de référence et un signal numérique d'un second niveau lorsque le signal de fréquence variable est plus petit en fréquence que le signal de fréquence de référence.

2. Système selon la revendication 1, comprenant en outre un processeur numérique (48) connecté au générateur de fréquence de référence (68) pour remettre à zéro la fréquence de référence pour compenser les décalages en fréquence du signal de fréquence variable.

3. Système selon la revendication 2, comprenant en outre un moyen de verrouillage (72) ayant une entrée et une sortie, l'entrée du moyen de verrouillage (72) étant connectée pour recevoir le signal numérique de sortie du moyen détecteur (30), le moyen de verrouillage (72) répondant à un signal de commande provenant du processeur numérique (48) pour maintenir sur la sortie du moyen de verrouillage un signal égal à l'un des niveaux numériques à la sortie du moyen détecteur (30) indépendamment des variations dans les niveaux des signaux de l'entrée du moyen de verrouillage (72).

4. Système selon la revendication 1, dans lequel le générateur de signnaux (24) comprend un oscillateur électronique (58) ayant une sortie (64) et un circuit bouchon (56) pour régler la fréquence des signaux à la sortie de l'oscillateur électronique (64); et dans lequel le détecteur (20) est un détecteur magnétique définissant un trajet de flux qui est relié à pièce en mouvement (12) et dans lequel l'intensité du flux magnétique varie selon la caractéristique physique de la zone de la pièce immédiatement adjacente au détecteur (50), le circuit bouchon (56) étant relié avec le trajet du flux pour faire varier la fréquence du signal de sortie de l'oscillateur alternativement entre une haute et une basse fréquences alors que la pièce (12) se déplace par rapport au détecteur (20).

5. Système selon la revendication 4, dans lequel le détecteur magnétique (20) comprend un noyau (50) en un matériau ferromagnétique, une source (54) de flux magnétique et un corps de support qui supporte le noyau et la source de flux en juxtaposition magnétique, le circuit bouchon (56) comprenant une bobine enroulée autour du noyau pour détecter l'inductance variable de la bobine avec des changements du flux passant par le noyau.

6. Système selon la revendication 1, comprenant un autre générateur de signaux (28) pour produire un signal de sortie alternatif; un autre détecteur (20, 52) adjacent à la pièce en mouvement et connecté à l'autre générateur de signaux (28) pour faire varier alternativement le signal de sortie de l'autre générateur de signaux entre une haute et une basse fréquences alors que les zones adjacentes alternées (16, 18) de la pièce en mouvement passent par l'autre détecteur (20, 52); un autre moyen détecteur (34) connecté à l'autre générateur de signaux (28) pour recevoir et détecter le signal de fréquence variable de l'autre générateur de signaux et comprenant un autre générateur de fréquence de référence (78) pour produire un signal de référence ayant une fréquence entre les haute et basse fréquences du signal de sortie de l'autre générateur de signaux (28) et un autre moyen (76, 80) pour recevoir et comparer les signaux de fréquences variable et de référence de l'autre générateur de signaux et de l'autre générateur de fréquence de référence respectivement, et pour produire à la sortie de l'autre moyen détecteur (34) un signal numérique d'un premier niveau lorsque le signal de fréquence variable de l'autre générateur de signaux est plus grand en fréquence que le signal de fréquence de référence de l'autre générateur de fréquence de référence et un signal numérique d'un second niveau lorsque le signal de fréquence variable de l'autre générateur de signaux est plus petit en fréquence que le signal de fréquence de référence de l'autre générateur de fréquence de référence, le signal numérique de sortie à la sortie de l'autre moyen détecteur (34) étant déphasé par rapport au signal de sortie numérique à la sortie du moyen détecteur (30).

7. Système selon la revendication 3, comprenant un moyen calculateur (38) pour recevoir le signal numérique de sortie du moyen de verrouillage (72) et produire un signal indicateur de la vitesse de la pièce en mouvement (12).

8. Système selon les revendications 6 et 7, comportant un autre moyen de verrouillage (84) ayant une entrée et une sortie, l'entrée de l'autre moyen de verrouillage (84) étant connectée pour recevoir le signal numérique de sortie de l'autre moyen détecteur (34) et l'autre moyen de verrouillage (84) répondant à un signal de commande à partir du processeur numérique (48) pour maintenir sur la sortie de l'autre moyen de verrouillage une signal égal à l'un des niveaux numériques à la sortie de l'autre moyen détecteur (34) indépendamment des variations des niveaux des signaux à l'entrée de l'autre moyen de verrouillage (84), le moyen calculateur (38) recevant en outre le signal numérique de sortie de l'autre moyen de verrouillage (84) et produisant un signal indicateur du sens de déplacement de la pièce en mouvement (12).

**Patentansprüche**

1. Bewegungsmeßsystem zur Messung der Geschwindigkeit eines sich bewegenden Teils (12) wie beispielsweise eines Zahnrads, welches relativ gut definierte benachbarte Gebiete von abwechselnd unterschiedlichen körperlichen Eigenschaften besitzt, wobei das System folgendes aufweist: einen Signalgenerator (24) zur Erzeugung eines alternierenden Ausgangssignals, einen Fühler (20), benachbart zum sich bewegenden Teil (12) und mit dem Signalgenerator (24) verbunden zur alternierenden Veränderung des Signalgenerator-Ausgangssignals zwischen einer hohen und einer niedrigen Frequenz, wenn die alternierenden benachbarten Gebiete (16, 18) des sich bewegenden Teils am Fühler (20) vorbeilaufen, Detektormittel (30), verbunden mit dem Signalgenerator (24) zum Empfang und zur Detektion des variablen Frequenzsignals des Signalgenerators, dadurch gekennzeichnet, daß die Detektormittel (30) einen Bezugsfrequenzgenerator (68) aufweisen zur Erzeugung eines Bezugssignals mit einer Frequenz zwischen den hohen und niedrigen Ausgangssignalfrequenzen des Signalgenerators (24) und Mittel (60, 70) zum Empfang und zum Vergleich der Variablen und Bezugsfrequenzsignale des Signalgenerators bzw. des Bezugsfrequenzgenerators und zur Erzeugung am Ausgang der Detektormittel (30) eines einen ersten Pegel besitzenden Digitalsignals, dann, wenn das variable Frequenzsignal eine höhere Frequenz besitzt als das Bezugsfrequenzsignal, und wobei ein einen zweiten Pegel aufweisendes Digitalsignal dann erzeugt wird, wenn das variable Frequenzsignal eine niedrige Frequenz besitzt als das Bezugsfrequenzsignal.

2. System nach Anspruch 1 mit einem Digitalprozessor (48), verbunden mit dem Bezugsfrequenzgenerator (68) zur Rücksetzung der Bezugsfrequenz zum Zwecke der Kompensation von Verschiebungen der Frequenz des variablen Frequenzsignals.

3. System nach Anspruch 2 mit Verriegelungsmitteln (72) mit einem Eingang und einem Ausgang, wobei der Eingang der Verriegelungsmittel (72) zum Empfang des digitalen Ausgangssignals der Detektormittel (30) geschaltet ist, während die Verriegelungsmittel (72) auf ein Steuersignal vom Digitalprozessor (48) ansprechen, um am Verriegelungsmittelausgang ein Signal gleich einem der Digitalpegel am Ausgang der Detektormittel (30) aufrechtzuerhalten, und zwar unabhängig von Veränderungen der Signalpegel am Eingang der Verriegelungsmittel (72).

4. System nach Anspruch 1, wobei der Signalgenerator (24) folgendes aufweist: einen elektronischen Oszillator (58) mit einem Ausgang (64) und einer Oszillatorschaltung (56) zur Steuerung der Frequenz der Signale am Ausgang des elektronischen Oszillators (64), und wobei der Fühler (20) ein Magnetfühler ist, der einen Flußpfad definiert mit Verbindungen zu dem sich bewegenden Teil (12) und in dem sich die magnetische Flußintensität entsprechend der physikalischen Eigenschaft des Teilegebiets unmittelbar benachbart zum Fühler (50) ändert, wobei der Oszillatorkreis (56), der mit dem Flußpfad in Verbindung steht, um die Frequenz des Oszillatorausgangssignals alternierend zwischen einer hohen und einer niedrigen Frequenz zu variieren wenn der Teil (12) sich bezüglich des Fühlers (20) gewegt.

5. System nach Anspruch 4, wobei der Magnetfühler (20) einen Kern (50) aus ferromagnetischem Material aufweist, ferner eine Quelle (54) für den magnetischen Fluß, und schließlich einen Tragkörper zum Tragen des Kerns und der Flußquelle in magnetischer Nachbarschaft, wobei die Oszillatorschaltung (56) eine um den Kern herumgewickelte Spule aufweist, um die sich verändernde Induktivität der Spule absufühlen, die sich mit dem durch den Kern laufenden Fluß verändert.

6. System nach Anspruch 1, mit einem weiteren Signalgenerator (28) zur Erzeugung eines alternierenden Ausgangssignals, einem weiteren Fühler (20, 52), benachbart zum sich bewegenden Teil und mit dem weiteren Signalgenerator (28) verbunden, zur alternierenden Veränderung des Ausgangssignals des weiteren Signalgenerators zwischen einer hohen und einer niedrigen Frequenz, wenn die alternierenden benachbarten Gebiete (16, 18) des sich bewegenden Teils an dem weiteren Fühler (20, 52) vorbeilaufen, weiteren Detektormitteln (34), verbunden mit dem weiteren Signalgenerator (28) zum Empfang und zur Detektion des variablen Frequenzsignals des weiteren Signalgenerators und einem weiteren Bezugsfrequenzgenerator (78) zur Erzeugung eines Bezugssignals mit einer Frequenz zwischen den hohen und den niedrigen Ausgangssignalfrequenzen des weiteren Signalgenerators (28) und mit weiteren Mitteln (76, 80) zum Empfang und zum Vergleich der Variablen und Bezugsfrequenzsignale des weiteren Signalgenerators bzw. des weiteren Bezugsfrequenzgenerators und zur Erzeugung am Ausgang der weiteren Detektormittel (34) eines einen ersten Pegel besitzenden Digitalsignals dann, wenn das variable Frequenzsignal des weiteren Signalgenerators in seiner Frequenz größer ist als das Bezugsfrequenzsignal des weiteren Bezugsfrequenzgenerators, und wobei ein einen zweiten Pegel aufweisendes Digitalsignal dann erzeugt wird, wenn das variable Frequenzsignal des weiteren Signalgenerators niedriger in der Frequenz ist als das Bezugsfrequenzsignal des weiteren Bezugsfrequenzgenerators, wobei das digitale Ausgangssignal am Ausgang der weiteren Detektormittel (34) phasenverschoben ist gegenüber dem digitalen Ausgangssignal am Ausgang der Detektormittel (30).

7. System nach Anspruch 3, mit Rechnungsmitteln (38) zum Empfang des digitalen Ausgangssignals der Verreigelungsmittel (72) und zur Erzeugung eines Signals, welches die Geschwindigkeit des sich bewegenden Teils (12) anzeigt.

8. System nach Anspruch 6 und 7, mit weiteren Verriegelungsmitteln (84) mit einem Eingang und einem Ausgang, wobei der Eingang der weiteren Verriegelungsmittel (84) zum Empfang des digitalen Ausgangssignals der weiteren Detektormittel (34) geschaltet ist, und wobei die weiteren Verriegelungsmittel (84) auf ein Steuersignal vom Digitalprozessor (48) ansprechen, um am weiteren Verriegelungsmittelausgang ein Signal aufrechtzuerhalten, welches gleich einem der digitalen Pegel am Ausgang der weiteren Detektormittel (34) ist, und zwar unabhängig von Variationen bei den Signalpegeln am Eingang der weiteren Verriegelungsmittel (84) und wobei die Rechnungsmittel (38) ferner das digitale Ausgangssignal der weiteren Verriegelungsmittel (84) empfangen und ein Signal erzeugen, welches für die Richtung der Bewegung des sich bewegenden Teils (12) eine Anzeige liefert.

$$\frac{fo_{iH}+fo_{iL}}{2}=fvco_1$$

**Fig-1**

_Fig-2_

_Fig-3_

2

# IFig-4